# EUROPEAN PATENT APPLICATION

(11) **EP 4 592 346 A1**
(43) Date of publication of application: **30.07.2025**
(21) Application number: 23868173.8
(22) Date of filing: 19.09.2023
(51) Int. Cl.: C08L 23/16, C08K 3/013, C08K 5/103, F16F 15/08, F16F 15/126

(54) **EPDM COMPOSITION**

(30) Priority: 22.09.2022 JP 2022150945
(71) Applicant: NOK Corporation, Minato-ku Tokyo 105-8585 (JP)
(72) Inventor: NAKAMURA, Jin, Saihaku-gun, Tottori 683-0362 (JP)
(74) Representative: Kraus & Lederer PartGmbB
(86) International application number: PCT/JP2023/033936
(87) International publication number: WO 2024/063052

(57) **Abstract**

An EPDM composition that is a rubber composition in which ethylene-propylene-diene terpolymer rubber is compounded with carbon black, a plasticizer, and a crosslinking agent, wherein the plasticizer is a polyol ester, which is a reaction product of a neopentyl type polyol and a monocarboxylic acid, and the amount of the plasticizer in the composition is 5 to 22 wt.%. The EPDM composition has excellent effects that kneadability and processability are not impaired, and that in terms of hardness changes after a heat aging test, the resulting crosslinked product is equivalent to when the same amount of an α-olefin oligomer is compounded, and is significantly improved compared to when an aliphatic dibasic acid ester is compounded.

## Description

### TECHNICAL FIELD

The present invention relates to an EPDM composition. More particularly, the present invention relates to an EPDM composition that is used as a molding material, such as an anti-vibration rubber for automobiles.

### BACKGROUND ART

Anti-vibration rubber for automobiles is mainly essential for preventing the transmission of vibration and noise generated by the engine and vibration and noise received from the road surface during driving to the inside of the vehicle. In recent years, due to the trend towards higher efficient of engines and space-saving in automobiles, the heat resistant environment near the engine compartment and around the exhaust pipe have become even more severe than before.

When anti-vibration rubber is thermally degraded, not only the increase in spring constant or elastic modulus reduces vibration isolation and damping functions, but also the decrease in strength and elongation deteriorates durability. Therefore, high heat resistance is required for anti-vibration rubber to maintain the functionality of the product to which the rubber is applied.

On the other hand, in the use of an automobile in an extremely low temperature environment, the rubber material approaches a glassy state, which may increase the spring constant or elastic modulus of the anti-vibration rubber, resulting in a decrease in its vibration isolation and damping functions. From such a point of view, low temperature properties are also becoming one of the important requirements for anti-vibration rubber for automobiles.

Here, EPDM is a polymer with a good balance between high heat resistance and excellent low temperature properties. In general, compounding technique that EPDM is used as a base polymer, and compounded with other fillers and plasticizers, improves the heat resistance and low temperature properties of anti-vibration rubber for automobiles.

As a method for improving the low temperature properties of EPDM, it is known to compound an α-olefin oligomer (Patent Document 1 etc.) and to compound an aliphatic dibasic acid ester (Patent Document 2 etc.). While those compounded with aliphatic dibasic acid esters have highly excellent low temperature properties, they are prone to thermal degradation caused by the oxygen atom of the carbonyl group abstracting the β-hydrogen atom derived from the alcohol, which tends to significantly impair the heat resistance of the rubber material. In addition, when α-olefin oligomers are compounded, a good balance can be achieved between low temperature properties and heat resistance; however, due to the recent demand for higher standards, further improvement is required for both of these properties.

### PRIOR ART DOCUMENTS

### PATENT DOCUMENTS

Patent Document 1 : WO 2005/057045
Patent Document 2 : JP-A-2005-172165

### OUTLINE OF THE INVENTION

### PROBLEM TO BE SOLVED BY THE INVENTION

An object of the present invention is to provide an EPDM composition that can give rubber with an excellent balance between low temperature properties and heat resistance, for example, vibration damping products for crankshafts and propeller shafts, and anti-vibration rubber for various mounting products.

### MEANS FOR SOLVING THE PROBLEM

The above object of the present invention can be achieved by an EPDM composition that is a rubber composition in which ethylene-propylene-diene terpolymer rubber is compounded with carbon black, a plasticizer, and a crosslinking agent, wherein the plasticizer is a polyol ester, which is a reaction product of a neopentyl type polyol and a monocarboxylic acid, and the amount of the plasticizer in the composition is 5 to 22 wt.%.

### EFFECT OF THE INVENTION

The EPDM composition according to the present invention has excellent effects that kneadability and processability are not impaired, and that in terms of hardness changes after a heat aging test, the resulting crosslinked product is equivalent to when the same amount of an α-olefin oligomer is compounded, and is significantly improved compared to when an aliphatic dibasic acid ester is compounded.

Further, as shown in the Examples and Comparative Examples described later, in a viscoelastic modulus temperature dependence test, the ratio of the elastic modulus E' at -30°C to the elastic modulus E' at 60°C, i.e., E' (-30/60°C), is inferior to that when an aliphatic dibasic acid ester is compounded; however, the low temperature properties are more excellent than those when an α-olefin oligomer is compounded.

These effects are due to the fact that a polyol ester, which is a reaction product of a neopentyl type polyol and a monocarboxylic acid, is compatible with EPDM, thereby enhancing the molecular mobility in the rubber material, improving low temperature properties, and not inhibiting the heat resistance of the material due to the structure of the polyol ester, which is resistant to thermal degradation.

### EMBODIMENTS FOR CARRYING OUT THE INVENTION

As ethylene-propylene-diene terpolymer rubber (EPDM), any products obtained by copolymerization of ethylene and propylene with a small amount of various diene components can be used. In practice, various commercially EPDMs, such as EP series, produced by JSR Corporation and Keltan series, produced by Arlanxeo, can be used as they are.

As carbon black, furnace black generally used as a reinforcing agent can be used. Preferably, carbon black with a nitrogen gas adsorption specific surface area of 20 to 240 m²/g and a DBP oil absorption amount of 40 to 180 ml/100g, for example, HAF carbon black, FEF carbon black, etc. are used. The carbon black is used in a proportion of about 20 to 40 wt.%, preferably about 25 to 40 wt.%, in the EDPM composition. If carbon black is used at a ratio less than this range, the reinforcing effect is reduced, making it difficult to satisfy basic rubber material physical properties. In contrast, if carbon black is used at a ratio greater than this range, aggregation of carbon black may adversely affect rubber material physical properties, which is not preferable.

As the plasticizer, a polyol ester composed of a neopentyl type polyol and a monocarboxylic acid, preferably from the viewpoint of low temperature properties, a polyol ester that is a reaction product of a trivalent neopentyl type polyol, such as trimethylolpropane, and a linear monocarboxylic acid having 5 to 15 carbon atoms, further preferably 5 to 12 carbon atoms, is compounded at a ratio of about 5 to 22 wt.% (e.g., 8 to 40 parts by weight based on 100 parts by weight of EPDM), preferably about 5 to 19 wt.%, in the EPDM composition. Polyol esters composed of neopentyl type polyols and monocarboxylic acids are resistant to thermal degradation due to the absence of β-hydrogen atoms derived from alcohol in their molecular structures, and have excellent heat resistance and low temperature properties. Actually, commercial products, such as Unister H-327R and H-334R produced by NOF Corporation, can be used as they are.

Then, the composition used as the basis for calculating the weight ratio of plasticizer etc. corresponds to one containing ethylene-propylene-diene terpolymer rubber, carbon black, a plasticizer, and a crosslinking agent, as well as an acid acceptor, a lubricant, an antioxidant, and a co-crosslinking agent. Even if other compounding agents are compounded, they are not included in the total weight of the composition used as the basis for calculating the weight ratio of plasticizer etc. If the amount of the polyol ester compounded in the composition is less than 5 wt.%, the effect of improving low temperature properties is small. In contrast, if the amount of the polyol ester exceeds 22 wt.%, the productivity and processability of the rubber material are deteriorated, and the polyol ester begins to precipitate from the crosslinked product.

As the organic peroxide cross-linking agent, organic peroxides usually used in the EPDM cross-linking, such as dicumyl peroxide, 2,5-dimethyl-2,5-bis(t-butyl peroxy)hexane, 2,5-dimethyl-2,5-bis (t-butyl peroxy) hexine-3, and the like, are used in a proportion of about 0.5 to 2.5 wt.%, preferably about 1.0 to 1.8 wt.%, in the EDPM composition.

As usually used, it is preferable to use a polyfunctional unsaturated compound such as triallyl isocyanurate, triallyl cyanurate, ethylene glycol dimethacrylate, trimethylolpropane trimethacrylate, N,N'-m-phenylene maleimide, or 1,2-polybutadiene, together with the organic peroxide cross-linking agent. The co-crosslinking agent is used in a proportion of about 1.0 to 5.0 parts by weight, based on 100 parts by weight of the EPDM.

Further, an acid acceptor such as an oxide or hydroxide of a divalent metal, or hydrotalcite, a lubricant such as stearic acid, and a generally used antioxidant for EPDM are used, respectively, at a ratio of about 3.0 to 5.0 parts by weight, about 0.5 to 3.0 parts by weight, and about 0.5 to 3.0 parts by weight, based on 100 parts by weight of EPDM.

Furthermore, the EPDM composition comprising each of the above components as essential components can optionally contain various additives so far widely and usually used within such a range that does not impair the object of the present invention.

The preparation of the composition is carried out by kneading through a kneader, rolls, and the like, and the kneading product is subjected to cross-linking molding into desired shapes by press vulcanization usually at about 170 to 190°C for about 2 to about 6 minutes, and, if necessary, is further subjected to oven vulcanization (secondary cross-linking) at about 150 to 80°C for about 1 to 5 hours.

### EXAMPLES

The following describes the present invention with reference to Examples.

### Example 1

| | |
|---|---|
| EPDM (EP22, produced by JSR Corporation) | 100 parts by weight |
| HAF carbon black | 56.6 parts by weight |
| Polyol ester plasticizer (UNISTER H-327R, produced by NOF Corporation) | 24.4 parts by weight [amount of plasticizer 12.6 wt.%] |
| Zinc oxide | 5 parts by weight |
| Stearic acid | 0.5 parts by weight |
| Antioxidant | 0.5 parts by weight |
| Co-crosslinking agent | 5.0 parts by weight |
| Crosslinking agent | 2.3 parts by weight |

Among the above components, the components other than the crosslinking agent were kneaded by a closed type kneader, and then transferred to an open roll. After the crosslinking agent was added thereto and further kneaded, press cure was performed at 180°C for 6 minutes, and oven cure was performed at 150°C for 5 hours, thereby obtaining a crosslinked product. During kneading, it was confirmed whether kneading was possible and whether the plasticizer precipitated. When kneading was impossible or when the plasticizer precipitated, these cases were evaluated as "×." In addition, the obtained crosslinked products were used to measure normal state physical properties, heat aging resistance, and elastic modulus temperature dependence. As for the heat aging resistance and elastic modulus temperature dependence, evaluations were also carried out when the amount of the plasticizer was 5.5 wt.% and 18.7 wt.%.

Normal state physical properties: according to JIS K6253 corresponding to
ISO 48-4:2018
according to JIS K6251corresponding to
ISO 37:2011

Heat aging resistance: Hardness (Hs) changes were measured after 70 hours of heat aging at 120°C or 150°C. The evaluation criteria were divided according to the plasticizer ratio (5.5 wt.%, 12.6 wt.%, and 18.7 wt.% or more), and evaluations were carried out as follows.
[120°C, 70 hours]

| | 5.5 wt.% | 12.6 wt.% | 18.7 wt.% or more |
|---|---|---|---|
| ⊚ | ±0 to +1 | ±0 to +2 | ±0 to +3 |
| ○ | +2 to +3 | +3 to +4 | +4 to +5 |
| △ | +3 to +5 | +5 to +6 | +6 to +7 |
| × | +6 or more | +7 or more | +8 or more |

[150°C, 70 hours]

| | 5.5 wt.% | 12.6 wt.% | 18.7 wt.% or more |
|---|---|---|---|
| ⊚ | ±0 to +3 | ±0 to +5 | ±0 to +7 |
| ○ | +4 to +5 | +6 to +7 | +8 to +9 |
| △ | +6 to +7 | +8 to +9 | +10 to +11 |
| × | +8 or more | +10 or more | +12 or more |

Elastic modulus temperature dependence: In the temperature range of -30°C to 60°C, E' was measured at a heating rate of 2°C/min from -30°C, and the value of E' (-30°C)/E' (60°C) was calculated.

The results were evaluated as follows according to the plasticizer ratio.

| | 5.5 wt.% | 12.6 wt.% | 18.7 wt.% or more |
|---|---|---|---|
| ⊚ | less than 4.8 | less than 4.0 | less than 3.7 |
| ○ | 4.8 or more less than 5.2 | 4.0 or more less than 4.3 | 3.7 or more less than 4.0 |
| △ | 5.2 or more less than 5.7 | 4.3 or more less than 4.8 | 4.0 or more less than 4.5 |
| × | 5.7 or more | 4.8 or more | 4.5 or more |

### Example 2

In Example 1, the amount of plasticizer was changed to 9.8 parts by weight (5.5 wt.%).

### Example 3

In Example 1, the amount of plasticizer was changed to 39.1 parts by weight (18.7 wt.%).

### Comparative Example 1

In Example 1, the plasticizer was not used.

### Comparative Example 2

In Example 1, the amount of plasticizer was changed to 5.2 parts by weight (3.0 wt.%).

### Comparative Example 3

In Example 1, the amount of plasticizer was changed to 58.6 parts by weight (25.6 wt.%).

### Comparative Example 4

In Example 1, the amount of plasticizer was changed to 87.9 parts by weight (34.1 wt.%).

Following Table 1 show the results obtained in the above Examples 1 to 3 and Comparative Examples 1 to 4.

**Table 1**

| Measurement-Evaluation item | Ex. 1 | Ex. 2 | Ex. 3 | Comp. Ex. 1 | Comp. Ex. 2 | Comp. Ex. 3 | Comp. Ex. 4 |
|---|---|---|---|---|---|---|---|
| Kneadability - Moldability | | | | | | | |
| Possible or impossible of kneading | Possible | Possible | Possible | Possible | Possible | Possible | Impossible |
| Presence or absence of plasticizer precipitated | none | none | none | none | none | yes | - |
| Evaluation | ○ | ○ | ○ | ○ | ○ | × | × |
| Normal state physical properties | | | | | | | |
| Hardness (JIS A) | 61 | 69 | 52 | 74 | 71 | 40 | - |
| Tensile strength (MPa) | 13.7 | 18.3 | 13.6 | 19.4 | 18.4 | 5.9 | - |
| Elongation (%) | 358 | 297 | 453 | 226 | 261 | 473 | - |
| 100% modulus (MPa) | 1.6 | 2.8 | 1.2 | 4.5 | 3.6 | 0.7 | - |
| Specific gravity | 1.068 | 1.080 | 1.061 | 1.084 | 1.082 | 1.052 | - |
| Heat aging resistance [120°C, 70 hours] | | | | | | | |
| Hardness change (point) | ±0 | ±0 | +1 | +1 | ±0 | +3 | - |
| Rate of change in tensile strength (%) | +13 | -5 | -9 | +8 | +2 | -7 | - |
| Rate of change in elongation (%) | +5 | -9 | -4 | +1 | -5 | -1 | - |
| Evaluation | ⊚ | ⊚ | ⊚ | - | ⊚ | ⊚ | - |
| Heat aging resistance [150°C, 70 hours] | | | | | | | |
| Hardness change (point) | +5 | +4 | +7 | +4 | +4 | +11 | - |
| Rate of change in tensile strength (%) | +6 | -10 | -9 | -21 | -10 | -1 | - |
| Rate of change in elongation (%) | -7 | -18 | -11 | -23 | -17 | -8 | - |
| Evaluation | ⊚ | ○ | ⊚ | - | ⊚ | △ | - |
| Elastic modulus temperature dependence | | | | | | | |
| E' (-30/60°C) | 3.89 | 4.63 | 3.37 | 6.51 | 5.59 | 3.36 | - |
| Evaluation | ⊚ | ⊚ | ⊚ | × | △ | ⊚ | - |

### Example 4

In Example 1, the same amount (25 part by weight; 12.6 wt.%) of polyol ester (UNISTER H-334R) was used as the plasticizer.

### Example 5

In Example 4, the amount of plasticizer was changed to 9.8 parts by weight (5.5 wt.%).

### Example 6

In Example 4, the amount of plasticizer was changed to 39.1 parts by weight (18.7 wt.%).

### Comparative Example 5

In Example 4, the amount of plasticizer was changed to 58.6 parts by weight (25.6 wt.%).

### Comparative Example 6

In Example 4, the amount of plasticizer was changed to 87.9 parts by weight (34.1 wt.%).

Following Table 2 show the results obtained in the above Examples 4 to 6 and Comparative Examples 5 to 6.

**Table 2**

| Measurement - Evaluation item | | Ex. 4 | Ex. 5 | Ex. 6 | Comp. Ex. 5 | Comp. Ex. 6 |
|---|---|---|---|---|---|---|
| Kneadability - Moldability | | | | | | |
| Possible or impossible of kneading | | Possible | Possible | Possible | Possible | Impossible |
| Presence or absence of plasticizer precipitated | | none | none | none | yes | - |
| Evaluation | | ○ | O | ○ | × | × |
| Normal state physical properties | | | | | | |
| Hardness | (JIS A) | 61 | 69 | 51 | 41 | - |
| Tensile strength | (MPa) | 14.0 | 18.1 | 13.6 | 7.3 | - |
| Elongation | (%) | 354 | 276 | 457 | 499 | - |
| 100% modulus | (MPa) | 1.6 | 3.0 | 1.1 | 0.8 | - |
| Specific gravity | | 1.068 | 1.080 | 1.062 | 1.053 | - |
| Heat aging resistance [120°C, 70 hours] | | | | | | |
| Hardness change | (point) | ±0 | ±0 | +1 | +1 | - |
| Rate of change in tensile strength | (%) | -2 | +1 | -5 | -3 | - |
| Rate of change in elongation | (%) | -3 | +3 | -3 | ±0 | - |
| Evaluation | | ⊚ | ⊚ | ⊚ | ⊚ | - |
| Heat aging resistance [150°C, 70 hours] | | | | | | |
| Hardness change (point) | | +5 | +4 | +7 | +11 | - |
| Rate of change in tensile strength | (%) | +11 | +1 | -4 | +3 | - |
| Rate of change in elongation | (%) | -2 | -3 | -9 | -9 | - |
| Evaluation | | ⊚ | ○ | ⊚ | △ | - |
| Elastic modulus temperature dependence | | | | | | |
| E' (-30/60°C) | | 3.87 | 4.61 | 3.56 | 3.45 | - |
| Evaluation | | ⊚ | ⊚ | ⊚ | ⊚ | - |

### Comparative Example 7

In Example 1, the same amount (24.4 part by weight; 12.6 wt.%) of poly-α-olefin (Durasyn 170, produced by INEOS Oligomers) was used as the plasticizer.

### Comparative Example 8

In Comparative Example 7, the amount of plasticizer was changed to 9.8 parts by weight (5.5 wt.%).

### Comparative Example 9

In Comparative Example 7, the amount of plasticizer was changed to 39.1 parts by weight (18.7 wt.%).

### Comparative Example 10

In Example 1, the same amount (24.4 part by weight; 12.6 wt.%) of poly-α-olefin (Durasyn 164, produced by INEOS Oligomers) was used as the plasticizer.

### Comparative Example 11

In Example 1, the same amount (24.4 part by weight; 12.6 wt.%) of dioctyl sebacate (DOS, produced by Taoka Chemical Co., Ltd.) was used as the plasticizer.

### Comparative Example 12

In Example 1, the same amount (24.4 part by weight; 12.6 wt.%) of diisodecyl adipate (DIDA, produced by Taoka Chemical Co., Ltd.) was used as the plasticizer.

### Comparative Example 13

In Example 1, the same amount (24.4 part by weight; 12.6 wt.%) of paraffinic process oil (Diana Process Oil PW-90, produced by Idemitsu Kosan Co., Ltd.) was used as the plasticizer.

### Comparative Example 14

In Example 1, the same amount (24.4 part by weight; 12.6 wt.%) of paraffinic process oil (Diana Process Oil PW-32, produced by Idemitsu Kosan Co., Ltd.) was used as the plasticizer.

Following Table 3 show the results obtained in the above Comparative Examples 7 to 14.

**Table 3**

| Measurement - Evaluation item | Comp. Ex. 7 | Comp. Ex. 8 | Comp. Ex. 9 | Comp. Ex. 10 | Comp. Ex. 11 | Comp. Ex. 12 | Comp. Ex. 13 | Comp. Ex. 14 |
|---|---|---|---|---|---|---|---|---|
| Kneadability - Moldability | | | | | | | | |
| Possible or impossible of kneading | Possible | Possible | Possible | Possible | Possible | Possible | Possible | Possible |
| Presence or absence of plasticizer precipitated | none | none | none | none | none | none | none | none |
| Evaluation | ○ | ○ | ○ | ○ | ○ | ○ | ○ | ○ |
| Normal state physical properties | | | | | | | | |
| Hardness (JIS A) | 60 | 68 | 53 | 60 | 61 | 61 | 61 | 63 |
| Tensile strength (MPa) | 13.7 | 17.0 | 11.2 | 13.4 | 14.1 | 17.2 | 11.9 | 14.0 |
| Elongation (%) | 323 | 264 | 381 | 308 | 359 | 399 | 312 | 343 |
| 100% modulus (MPa) | 1.8 | 3.0 | 1.2 | 1.9 | 1.6 | 1.8 | 1.7 | 1.7 |
| Specific gravity | 1.049 | 1.071 | 1.029 | 1.058 | 1.066 | 1.072 | 1.053 | 1.058 |
| Heat aging resistance [120°C, 70 hours] | | | | | | | | |
| Hardness change (point) | ±0 | ±0 | +2 | +3 | +4 | +5 | +1 | +2 |
| Rate of change in tensile strength (%) | -2 | +3 | -4 | +11 | +2 | +8 | +11 | +6 |
| Rate of change in elongation (%) | **-2** | ±0 | **-2** | +3 | **-1** | +3 | +3 | **-2** |
| Evaluation | ⊚ | ⊚ | ⊚ | ○ | ○ | Δ | ⊚ | ⊚ |
| Heat aging resistance [150°C, 70 hours] | | | | | | | | |
| Hardness change (point) | +2 | +2 | +5 | +10 | +14 | +14 | +6 | +9 |
| Rate of change in tensile strength (%) | -4 | -4 | -6 | +14 | +9 | -8 | +2 | -4 |
| Rate of change in elongation (%) | -9 | -12 | -8 | -5 | -12 | -23 | -8 | -16 |
| Evaluation | ⊚ | ⊚ | ⊚ | × | × | × | ○ | Δ |
| Elastic modulus temperature dependence | | | | | | | | |
| E'(-30/60°C) | 4.46 | 5.53 | 4.30 | 3.81 | 3.40 | 3.51 | 5.09 | 4.37 |
| Evaluation | Δ | Δ | Δ | ⊚ | ⊚ | ⊚ | × | Δ |

### INDUSTRIAL APPLICABILITY

The crosslinked product of the EPDM composition of the present invention has an excellent balance between low temperature properties and heat resistance, and thus can be effectively used as a molding material for anti-vibration rubber for automobiles used in harsh thermal environments and cold regions, such as vibration damping products for crankshafts and propeller shafts, and various mounting products.

## Claims

1. An EPDM composition that is a rubber composition in which ethylene-propylene-diene terpolymer rubber is compounded with carbon black, a plasticizer, and a crosslinking agent, wherein the plasticizer is a polyol ester, which is a reaction product of a neopentyl type polyol and a monocarboxylic acid, and the amount of the plasticizer in the composition is 5 to 22 wt.%.

2. The EPDM composition according to claim 1, wherein the polyol ester is a reaction product of a trivalent neopentyl type polyol and a linear carboxylic acid having 5 to 15 carbon atoms.

3. The EPDM composition according to claim 2, wherein the trivalent neopentyl type polyol is a trimethylolpropane.

4. The crosslinked molded article of the EPDM composition according to claim 1.

5. The anti-vibration rubber comprising the crosslinked molded article according to claim 4.
